# EUROPÄISCHE PATENTSCHRIFT

(11) **EP 2 994 320 B1**
(45) Veröffentlichungstag und Bekanntmachung des Hinweises auf die Patenterteilung: **08.03.2017**
(21) Anmeldenummer: 14725355.3
(22) Anmeldetag: 12.04.2014
(51) Int. Cl.: B43K 29/00, G06F 3/044, G06F 3/0354

(54) **EINGABEGERÄT FÜR BERÜHRUNGSEMPFINDLICHE, KAPAZITIVE OBERFLÄCHEN**
STYLUS FOR TOUCH-SENSITIVE, CAPACITIVE SURFACES
STYLET POUR DES SURFACES TACTILES CAPACITIVES

(30) Priorität: 08.05.2013 DE 102013008231
(43) Veröffentlichungstag der Anmeldung: 16.03.2016
(73) Patentinhaber: STAEDTLER Mars GmbH & Co. KG, 90427 Nürnberg (DE)
(72) Erfinder: SCHWAB, Oliver, 90556 Cadolzburg (DE)
(86) Internationale Anmeldenummer: PCT/EP2014/000984
(87) Internationale Veröffentlichungsnummer: WO 2014/180530

(56) Entgegenhaltungen:
- EP-A2- 0 283 250
- US-A1- 2008 266 267

## Beschreibung

Die Erfindung betrifft ein Eingabegerät für berührungsempfindliche, kapazitive Oberflächen, wobei das Gerät als ein mit einem Auftragsmedium gefülltes Schreib-, Zeichen- und/oder Malutensil oder als ein Kosmetikutensil vorliegt.
Eingabegeräte für derartige Oberflächen/Displays sind prinzipiell bekannt.
So sind beispielsweise Eingabegriffel bekannt, welche aus einem elektrisch leitfähigen Schaft bestehen, wobei an einem Ende ein weicher, leitfähiger, elastisch ausgebildeter Kontaktstopfen für das Display bzw. die Oberfläche des Displays ausgebildet ist.
Nachteilig ist es bei derartigen Eingabestiften, dass sie als reiner Eingabestift zu teuer sind und zudem keine Schreib- und/oder Auftragsfunktion erfüllen.
Weiter gibt es Eingabestifte, welche an einem Ende ein Schreiborgan oder einen Applikator und an dem anderen Ende eine elektrisch leitfähige Anordnung in Form eines Kontaktstopfens aufweisen, welcher bei Berührung des kapazitiven Displays eine Eingabefunktion ermöglicht bzw. auslöst.
Die bekannten und oben aufgeführten Eingabestifte weisen jedoch eine Vielzahl von Nachteilen auf.
So sind derartige Stifte teuer in der Herstellung, da die Schäfte leitfähig ausgestaltet sind, was bis dato für konventionelle Auftragsgeräte nicht nötig war. Weiter sind nahezu alle diese Eingabestifte nach dem Stand der Technik als Kugelschreiber ausgebildet, wodurch der Benutzer in seiner Auswahl des Schreibmediums sehr eingeschränkt ist.

Aus der EP A 0 283 250 ist ein Eingabegerät gemäß dem Oberbegriff des Anspruchs 1 offenbar. Aus der US 2008/0266267 A1 ist ein Eingabehalter bekannt, der im Wesentlichen aus einem reinen Styluselement besteht. Dieses Styluselement ist ein Universalhalter, der aufgrund seines leitfähigen Schaftes als Eingabeelement funktioniert, wobei an dieses Eingabeelement optional verschiedene Anzeige-, Auftragsgeräte und der gleichen angedockt werden können, aber mit der eigentlichen Funktion nichts zu tun haben.
Nachteilig ist es bei dieser Lösung anzusehen, dass der Eingabehalter teuer in der Herstellung ist. Zudem sind die Anzeige und/oder Auftragsgeräte verlierbar am Eingabehalter angeordnet.
**Aufgabe** der Erfindung ist es daher, ein Eingabegerät für berührungsempfindliche kapazitive Oberflächen zu schaffen, welches die genannten Nachteile nicht aufweist, wobei das Eingabegerät neben der Eingabefunktion auch eine Auftragsfunktion aufweist.
Weiter ist es Aufgabe der Erfindung ohne konstruktive Veränderungen an einem bereits bekannten Auftragsgerät eine Eingabefunktion zu realisieren.
Unter Auftragsgeräten werden nachfolgend Schreib-, Zeichen- und/oder Malgeräte, wie beispielsweise Faserschreibgeräte verstanden.
Gelöst wird die Aufgabe mit den Merkmalen des Hauptanspruchs.
Vorteilhafte Ausgestaltungen werden durch die Unteransprüche umfasst.

Das Eingabegerät besteht mindestens aus einem Halter/Schaft mit mindestens einem Auftragselement.
Der Halter ist ein mit einem flüssigen Auftragsmedium gefüllt, wobei der Halter bzw. Schaft nicht leitfähig, zumindest jedoch im Griffbereich des Anwenders nicht leitfähig ausgebildet ist. Das Auftragsmedium hingegen ist elektrisch leitfähig ausgebildet ist, wobei dadurch zwischen dem mindestens einen Auftragselement und dem flüssigen Auftragsmedium im inneren des Halters eine elektrisch leitfähige Verbindung ausgebildet ist.
Hierbei hat es sich als überraschend herausgestellt, dass das Gerät als ein Eingabegerät funktioniert und die Oberfläche des Halters des Gerätes nicht elektrisch leitfähig ausgebildet sein muss.
Beispielhaft für nicht leitfähige Halter seinen Schäfte aus thermoplastischen Kunststoffen wie Polypropylen (PP) oder Polyethylen (PE) genannt.

Weiter hat es sich als überraschend herausgestellt, dass eine nicht feste Substanz/ Auftragsmedium, im vorliegenden Falle eine flüssige Substanz als ein Funktionselement des Eingabegerätes ausgebildet ist.

Das flüssige Auftragsmedium kann als freie Flüssigkeit im Halter oder als kapillar gebundene Flüssigkeit in einem Speichersystem vorliegen.
Das flüssige Auftragsmedium kann hierbei als Tinte, Tusche oder farblose Lösch- oder Reinigungsflüssigkeit vorliegen. Hierbei ist es unerheblich, ob es sich um wässrige oder nichtwässrige Auftragsmedien handelt. Wichtig für die Funktion in einem Eingabegerät ist lediglich die elektrische Leitfähigkeit des entsprechenden Auftragsmediums.

Unabhängig von der Ausprägung des Auftragsmediums ist der Sachverhalt, dass es zwingend erforderlich ist, dass zwischen dem mit leifähigem Auftragsmedium versehenen Auftragselement und dem im inneren des Halters gespeicherten Auftragsmedium eine elektrisch leitfähige Verbindung ausgebildet ist.
Das Auftragselement ist gleichzeitig das Kontaktierungselement, welches im Moment der "Eingabe" die Oberfläche der berührungsempfindlichen, kapazitiven Displays berührt.

Damit ist wie bei Eingabegeräten nach dem Stand der Technik das Auftragselement/Kontaktierungselement aus einem nicht starrem oder hartem Material ausgebildet, damit die glasartigen Oberflächen der Displays nicht beschädigt oder verkratzt werden.
Die Auftragselemente sind bei der vorliegenden Erfindung als Faser-, Gummi-, Schaum- oder gesinterte Kunststoffspitzen ausgebildet.

Zur besseren Darstellung der erfindungsgemäßen Lösung ist die nachfolgende **Figur** angeführt.

Die **Figur** zeigt eine mögliche Ausführungsform eines Gerätes bzw.
Eingabegerätes 1, bei der das Gerät 10 als ein Halter/Schaft 101 mit Auftragselement 103, Speichersystem 107 und einem Endstopfen 102 vorliegt. Der Halter 101 bzw. der Schaft ist mit einer abnehmbaren Abschlusskappe 20 verschlossen.
Zwischen der Spitze des Auftragselementes 103 und dem mit elektrisch leitfähigem Auftragsmedium 105 getränktem Speichersystem 107 ist eine elektrisch leitfähige Verbindung ausgebildet.
Das Material des Halters 101 bzw. Schaftes, die in der Regel den Griffbereich beinhalten, sind elektrisch nicht leitend ausgebildet.

Im Falle der nicht dargestellten Benutzungs- bzw. Eingabeaktion auf einem Tablet oder Display kontaktiert das Auftragselement die Oberfläche des Tablets und stellt damit eine leitende Verbindung mit dem mit Tinte getränkten Speichersystem her, wodurch es an der Oberfläche des Tablets zu einer Ladungsverschiebung kommt und damit eine Eingabefunktion realisiert wird.
In überraschender Weise hat sich nunmehr gezeigt, dass die Funktion "Eingabe" auch dann funktioniert, wenn der Halter/Schaft als ein Isolator vorliegt. In diesem Fall bildet sich ein kapazitives Element zwischen den Fingern des Benutzers und Speichersystem aus, wodurch am Tablet eine Ladungsverschiebung stattfindet und damit eine Eingabe erfolgreich getätigt wird.

In einer nicht dargestellten Variante ist im Inneren des Halters (101) kein Speichersystem (107) angeordnet, sondern das Auftragsmedium (105) liegt als eine freie Flüssigkeit/Auftragsmedium vor.

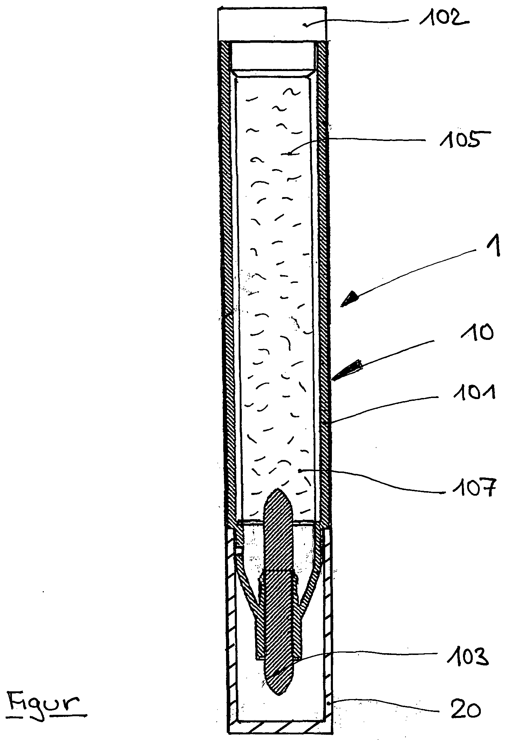

Wie in der Figur beschrieben, muss das Auftragsmedium leitfähig ausgebildet sein.
Nachfolgend sind beispielhaft einige **Rezepturbeispiele** genannt, welche das Kriterium der Leitfähigkeit erfüllen.

**Rezepturbeispiel 1: gelbe Textmarkertinte gemäß DE 43 20 959 C2, Beispiel 8.1**

| | |
|---|---|
| Wasser | 470 g |
| Lanolin Sulfosuccinat | 20 g |
| Benzisothiazolinon | 2 g |
| Pentaglycerin | 100- 150 g |
| Basic Yellow 40 (500%) | 6,5 g |
| Solvent Yellow 43 | 0,5 g |
| Kunststoffdispersion (40-42%) | 420 g |

| | |
|---|---|
| + weitere Schritte zur Herstellung siehe DE 43 20 959 C2 | |

In der DE 43 20 959 C2 sind eine Vielzahl von Beispieltinten, welche ebenfalls die Kriterien der Leitfähigkeit erfüllen und im erfindungsgemäßen Eingabegerät eingesetzt werden können.

**Rezepturbeispiel 3: rote Tinte für Fasermaler**

| | |
|---|---|
| Wasser | 61,8 Gew. % |
| Konservierungsmittel | 0,2 Gew. % |
| Bienenwachs | 0,3 Gew. % |
| Triethanolamin | 0,3 Gew. % |
| Emulgator | 1,4 Gew. % |
| Gummi Arabicum | 0,1 Gew. % |
| Diethylenglycol | 32,1 Gew, % |
| Farbstoffe | 3,8 Gew. % |

Rezepturbeispiel 3 ist aus der DE 297 14 594 U1 bekannt. Als weitere Tinten sei auf die Rezepturbeispiele 1 bis 9 in dieser Schrift verwiesen, welche aufgrund Ihrer Zusammensetzung ebenfalls leitfähig sind.

**Rezepturbeispiel 3: farblose alkoholische Löschtinte**

| | |
|---|---|
| Ethyllacetat | 18,0 Gew. % |
| 1-Methoxypropanol-2 | 24,5 Gew. % |
| Fluoralkalyl acrylat copolymer | 1,0 Gew. % |
| Ethoxypropanol | 20,0 Gew. % |
| Ethanol | 28,5 Gew. % |
| 1,2 Propanol | 14,0 Gew. % |
| Farbstoffe | 3,8 Gew. % |
| Natrium-Dodecylhydrogensulfat | 3,0 Gew. % |

Diese Löschtinte hinterlässt auf der Oberfläche des Displays keinerlei Spuren und übernimmt zudem eine Reinigungsfunktion.

Vorteil dieser in der Figur beispielhaft beschrieben Lösung liegt darin, dass handelsübliche Schreibgeräte für das erfindungsgemäße Eingabegerät keine Modifikation erfahren.

### Positionsliste

- 1: Eingabegerät
10 Auftragsgerät
101 Halter
102 Endstopfen
103 Auftragselement
105 Auftragsmedium
107 Speichersystem
20 Abschlusskappe

## Patentansprüche

1. **Eingabegerät** für berührungsempfindliche, kapazitive Oberflächen, wobei das Gerät aus einem Halter und mindestens aus einem Auftragselement besteht, wobei das Gerät als ein mit einem flüssigen Auftragsmedium gefüllter Halter ausgebildet ist, der Halter des Auftragsgerätes zumindest im Griffbereich elektrisch nicht leitfähig ausgebildet ist, **dadurch gekennzeichnet, dass** das Auftragsmedium elektrisch leitfähig ausgebildet ist und dass zwischen dem mindestens einen Auftragselement und dem flüssigen, Auftragsmedium eine elektrisch leitfähige Verbindung ausgebildet ist.

2. Eingabegerät nach Anspruch 1,
**dadurch gekennzeichnet,**
**dass** das flüssige Auftragsmedium im Halter als freie Flüssigkeit vorliegt.

3. Eingabegerät nach Anspruch 1,
**dadurch gekennzeichnet,**
**dass** das flüssige Auftragsmedium in einem Speichersystem als kapillar gebundene Flüssigkeit vorliegt.

4. Eingabegerät nach Anspruch 1,
**dadurch gekennzeichnet,**
**dass** das Auftragselement als ein Kontaktierungselement ausgebildet ist.

## Claims

1. Input device for touch-sensitive capacitive surfaces, wherein the device consists of a holder and at least one application element, wherein the device is constructed as a holder filled with a liquid coating medium and the holder of the application device is constructed to be electrically non-conductive at least in the grip region, **characterised in that** the coating medium has an electrically conductive composition and that an electrically conductive connection is formed between the at least one application element and the liquid coating medium.

2. Input device according to claim 1, **characterised in that** the liquid coating medium is present in the holder as a free liquid.

3. Input device according to claim 1, **characterised in that** the liquid coating medium is present in a storage system as a capillary-bound liquid.

4. Input device according to claim 1, **characterised in that** the application element is constructed as a contacting element.

## Revendications

1. Instrument de saisie pour surfaces capacitives réagissant au contact, ledit instrument étant composé d'un support et d'au moins un élément applicateur,
ledit instrument étant réalisé sous la forme d'un support empli d'un agent liquide à déposer,
la réalisation dudit support de l'instrument applicateur étant électriquement non conductrice, au moins dans la zone de préhension,
**caractérisé par le fait**
**que** l'agent à déposer est de réalisation électriquement conductrice ;
et par le fait qu'une jonction électriquement conductrice est instaurée entre l'élément applicateur, à présence minimale, et l'agent liquide à déposer.

2. Instrument de saisie selon la revendication 1,
**caractérisé par le fait**
**que** l'agent liquide à déposer se présente, dans le support, sous la forme d'un liquide libre.

3. Instrument de saisie selon la revendication 1,
**caractérisé par le fait**
**que** l'agent liquide à déposer se présente, dans un système d'accumulation, sous la forme d'un liquide à liaison capillaire.

4. Instrument de saisie selon la revendication 1,
**caractérisé par le fait**
**que** l'élément applicateur est réalisé sous la forme d'un élément établissant un contact.
